(19) **Europäisches Patentamt**

**European Patent Office**

**Office européen des brevets**

(11) **EP 0 874 532 B1**

(12) **EUROPEAN PATENT SPECIFICATION**

(45) Date of publication and mention
of the grant of the patent:
**04.08.2004 Bulletin 2004/32**

(51) Int Cl.⁷: $H04Q\ 11/04$, $H04L\ 12/56$

(21) Application number: **98303062.8**

(22) Date of filing: **21.04.1998**

(54) **Ansynchronous transfer mode cell scheduling method**

ATM Zellenzuweisungsverfahren

Méthode de planification de cellules ATM

(84) Designated Contracting States:
**DE FR GB**

(30) Priority: **25.04.1997 US 843108**

(43) Date of publication of application:
**28.10.1998 Bulletin 1998/44**

(73) Proprietor: **Applied Microcircuits Corporation**
**San Diego, CA 92121 (US)**

(72) Inventor: **Joffe, Alexander**
**Palo Alto, CA 94306 (US)**

(74) Representative: **Gill, David Alan et al**
**W.P. Thompson & Co.,**
**55 Drury Lane**
**London WC2B 5SQ (GB)**

(56) References cited:
**EP-A- 0 596 624          EP-A- 0 702 472**

**Description**

The invention relates to cell scheduling in Asynchronous Transfer Mode (ATM) networks.

Ideally, fair cell schedulers should continuously subdivide available bandwidth among competing virtual channels (VCs) according to their weights. While such an hypothetical scheduler has not been built, existing queuing methods try to approximate this model. However, the complexity of these methods, and the resulting processing time required, make them undesirable for high-speed ATM switches, which require a new cell to be selected for transmission every few microseconds. In addition, ATM switches often service tens of thousands of virtual channels, multiplexed onto a single physical link, with connection throughput requirements varying over a wide range, further compounding the requirement for fast scheduling methods.

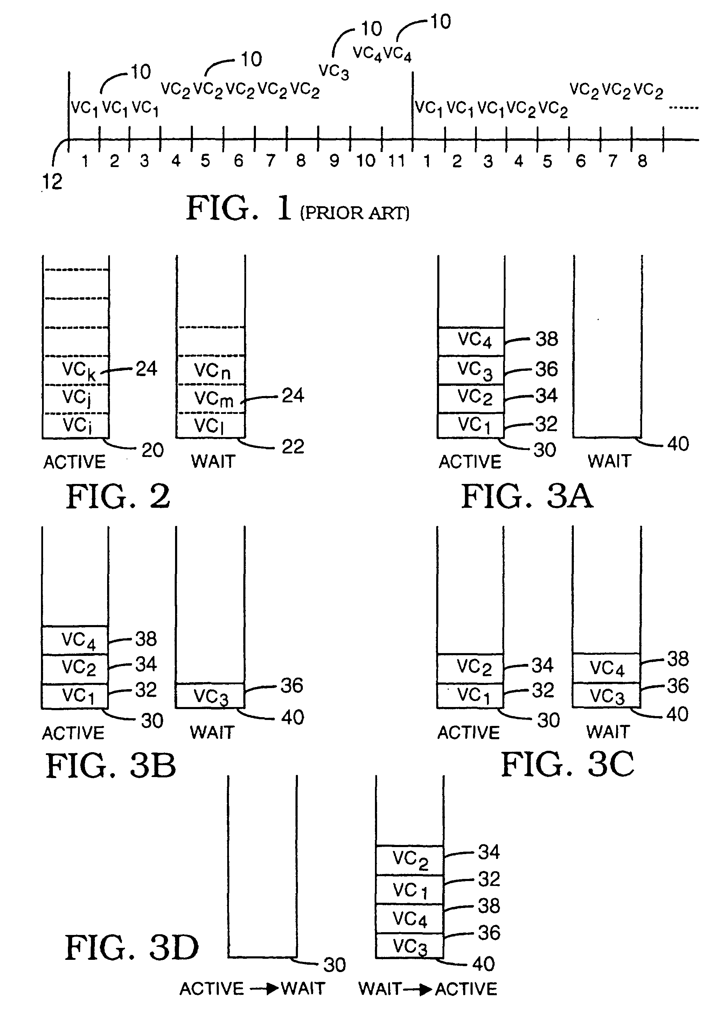

A simple prior art scheduling method is described in Fig. 1. According to the method of Fig. 1, each VC is allowed to transmit a burst equal to its weight. A variety of VC entries 10 are shown on timeline 12, indicating the order in which they are transmitted. Thus, if VC1 has a weight = 3, VC2 has weight = 5, VC3 has weight =1 and VC4 has weight = 2, VC will transmit at times 1, 2 and 3, VC2 will transmit at times 4, 5, 6, 7 and 8, VC3 will transmit at time 9 and VC4 will transmit at times 10 and 11.

EP-A-0702472 discloses a method and apparatus for shaping the output traffic in a transmit part of a network node adapter. The network node supports fixed length cell switching user information traffics and two look-up tables are employed and which are referred to as an active calendar and a standby calender. Each entry in the calendars represents the position of one cell in the output cell stream and the active calendar is continuously read. For each entry read, a cell of the corresponding traffic is sent onto the output line and if the entry is empty, an elapsed time corresponding to the cell departure time is sustained by the transmit device or an idle cell is sent which will be discarded by the remote device. When the last entry is read, the reading restarts at the first entry. At each change with the user traffics, i.e. new traffic added, one traffic terminated or one traffic modified, the standby calendar is prepared and, once ready, the standby calendar is swapped to the active calendar.

The present invention provides for a method of operating a cell scheduler for performing asynchronous time mode transfer of virtual channel cells, the scheduler including first and second queues, the method comprising assigning a weight to a virtual channel queued at the first queue, transmitting a plurality of cells of the virtual channel, moving the virtual channel from the first queue to the second queue, and switching the first and the second queue.

This provides for an easy to implement method for fair weighted ATM scheduling, which allows for a large number of weights to support a large number of VCs.

Unlike prior art schedulers which use simple scheduling schemes such as giving each VC a burst equal to its weight, the present invention provides a scheduling method which spreads out the burst of each VC to achieve the speed required for fast ATM scheduling, significantly improving network performance.

The invention is described further hereinafter, by way of example only, with reference to the accompanying drawings.

Fig. 1 shows a prior art fair scheduling scheme.
Fig. 2 illustrates the preferred embodiment of the present invention.
Figs. 3A-3D illustrate the preferred embodiment at successive times during the scheduling process.
Figs. 4A-4C show the scheduling scheme of the preferred embodiment at successive times during the scheduling process.
Fig. 5 illustrates the scheduling scheme of the preferred embodiment at the end of a scheduling cycle.
Fig. 6 is a block diagram of one embodiment of the present invention.
Fig. 7 shows an example of the scheduling scheme of the preferred embodiment.
Fig. 8 is a two-dimensional graph representing the relationship between a minimum guaranteed bandwidth and a maximum allowed bandwidth in a multiple scheduler embodiment of the present invention.
Fig. 9 illustrates a "doubly leaky bucket."
Figs. 10-11 show of multiple scheduler embodiments of the present invention.
Fig. 12 is a flowchart diagram of the scheduling of VC cells.
Fig. 13 is a block diagram of an integrated circuit for scheduling of ATM cells, according to one embodiment of the invention.
Fig. 14 is a block diagram of an ATM switch according to one embodiment of the invention.

The present invention provides a method that improves over the simple scheduling scheme of Fig. 1, by spreading out each VC's burst. In Fig. 2, several VCs 24 are queued on active queue 20 and wait queue 22, waiting to be scheduled. Each VC 24 has a weight, which is used to determine the portion of available bandwidth assigned to that VC. In addition, a scaling coefficient S is defined equal to the maximum weight divided by the maximum burst allowed. The scaling coefficient is used to regulate the duration of individual bursts independently from the weight of the VCs.

Once the scaling coefficient has been defined, the weight W of each coefficient is divided by the scaling coefficient S and the result is rounded to the nearest integer. Initially, all VCs are placed in the active queue, while the wait queue is empty. The first VC is then removed from the queue and w cells to be transmitted on that VC are transmitted. The number of cells transmitted w is then subtracted from a counter initially set to a value equal to the weight of the VC. If the value of the counter is equal to zero, the VC is moved to the wait queue. Once all VCs have been moved to the wait queue, the wait queue becomes the active queue and the active queue becomes the wait queue, as shown in Table 1.

Table 1.

Scheduling Process.

```
while (Active_Queue is not Empty)
{
        remove VC from Head of Queue;
        burst = VC->B;count = VC->C;
        while (burst != 0)
        {
                send_cell;
                burst--;
                count--;
                if (count == 0)
                {
                        move VC to Wait_Queue;
                        VC->C = W;
                        break;
                }
        }
        if (count != 0)
        {
                add VC to Active_Queue;
                VC->C=count;
        }

}
switch (Active_Queue, Wait_Queue);
```

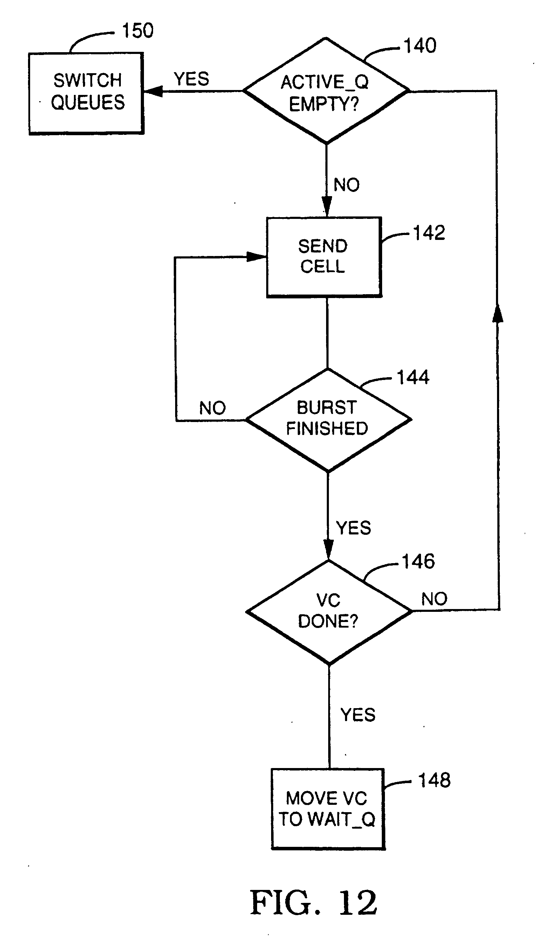

The operation of Table 1 is further illustrated by the flow diagram of Fig. 12. Stage 140 first determines whether the active queue is empty, in which case the active queue and the wait queue are switched in stage 150; otherwise a cell is transmitted in stage 142. Stage 144 then determines whether the current burst is finished, in which case the operation proceeds to stage 146; otherwise stage 142 is repeated. Stage 146 determines whether the VC has used all of the bandwidth allocated to the VC, in which case the VC is moved to the wait queue in stage 148; otherwise stage 140 is repeated.

Figs. 3A-4C illustrate an example of the functioning of the scheduling operation of the preferred embodiment. While the example of Figs. 3A-4C uses four VCs, vc-1 32, vc-2 34, vc-3 36 and vc-4 38, for clarity, the invention is not limited to any number of VCs. In particular, the scheduling method of the present invention can be used to schedule an arbitrary number of VCs queued on an ATM switch. Vc-1 has a weight = 3, vc-2 has weight = 5, vc-3 has a weight = 2 and vc-4 has weight = 2, and the scaling coefficient is 2. The burst size of each VC is determined by dividing the weight of each VC by the scaling factor and rounding the result to the nearest integer. Thus, vc-1 has a burst of 1 cell, vc-2 has a burst of 2 cells, vc-3 has a burst of 1 cell and vc-4 has a burst of 1 cell.

As shown in Fig. 3A, vc-1 32, vc-2 34, vc-3 36 and vc-4 38 are initially placed in active queue 30, while wait queue 40 is empty. Vc-1 32 is then serviced and a single vc-1 cell 44 is transmitted on transmission line 42. A counter on vc-1 32 is decreased by one to indicated that one cell of vc-1 32 has been transmitted. As the value of the vc-1 counter is greater than zero (3-1 = 2), vc-1 32 remains on the active queue 30 and vc-2 34 is serviced. Two vc-2 cells 46 are transmitted on transmission line 42 and the vc-2 counter is decreased by two. As the value of the vc-2 counter is greater than zero (5-2 = 3), vc-2 34 remains on the active queue 30 and vc-3 36 is serviced. A single vc-3 cell 48 is transmitted on transmission line 42 and the vc-3 counter is decreased by one. As the value of the vc-3 counter is equal to zero (1-1 = 0), vc-3 36 is transferred to the wait queue 40, as shown in Fig. 3B. Finally, vc-4 38 is serviced and a single vc-4 entry 50 is transmitted on transmission line 42. As the value of the vc-4 counter is greater than zero (2-1 = 1), vc-4 remains on the active queue 30, thus concluding the first round of scheduling.

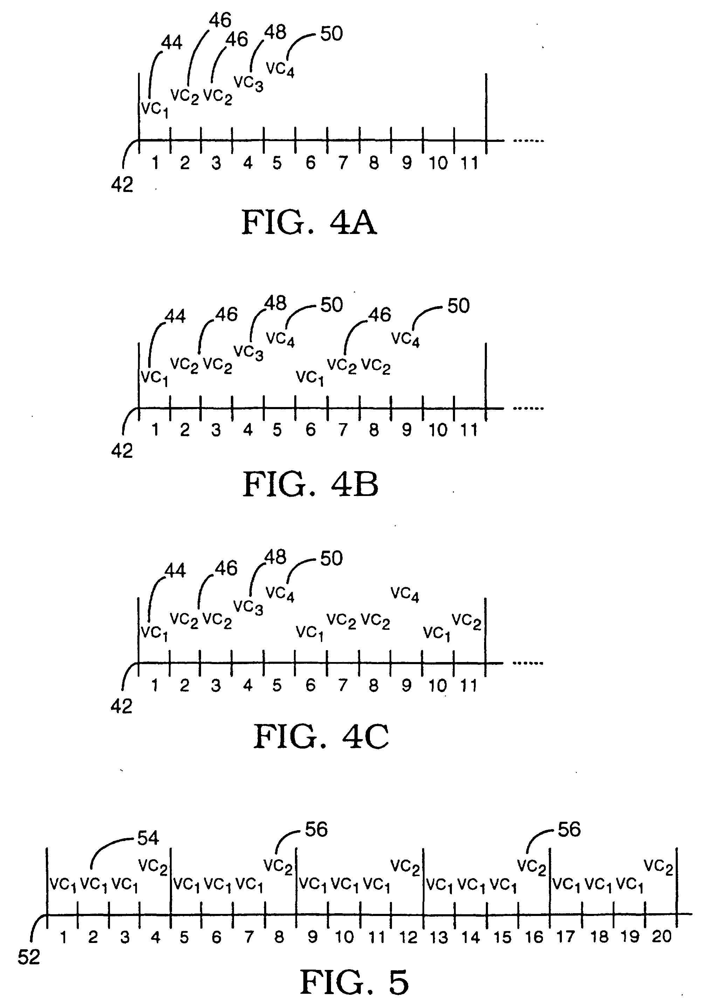

Figs. 3B and 4B illustrate the second and third rounds of scheduling, at the end of which vc-4 38 is on the wait queue 40. Figs. 3C and 4C illustrate the fourth, fifth and sixth rounds of scheduling, at the end of which all VCs are on the wait queue 40. Once the active queue 30 is empty, the active queue 30 becomes the wait queue and the wait queue 40 becomes the active queue, as shown in Fig. 3D.

Fig. 5 illustrates another example of the functioning of the scheduling method of the preferred embodiment. In Fig. 5, vc-1 has a weight of 15, vc-2 has a weight of 5, and the scaling coefficient is 4. As a result, vc-1 has a burst length of 3 cells and vc-2 has a burst length of 1 cell. Thus, in each round of scheduling 3 vc-1 cells 54 and 1 vc-2 cells 56 are transmitted on transmission line 52.

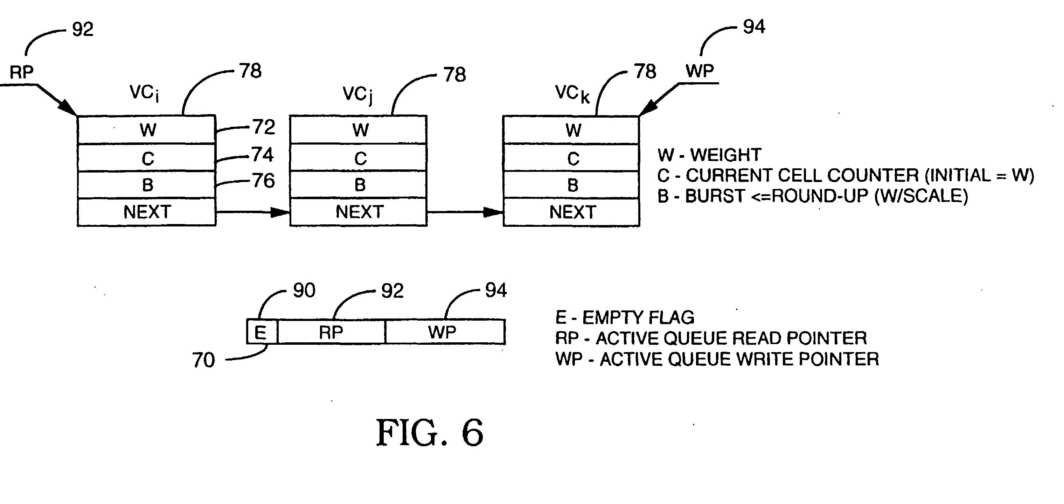

Fig. 6 illustrates the structure of the active queue and the wait queue components of the present invention. Each queue consists of a register 70, which contains an empty flag 90, a read pointer 92 and a write pointer 94. Both read pointer 92 and write pointer 94 point to additional registers containing the parameters corresponding to the VCs stored on the queue. Each VC register 78 contains a weight 72, a counter 74 and a burst size 76.

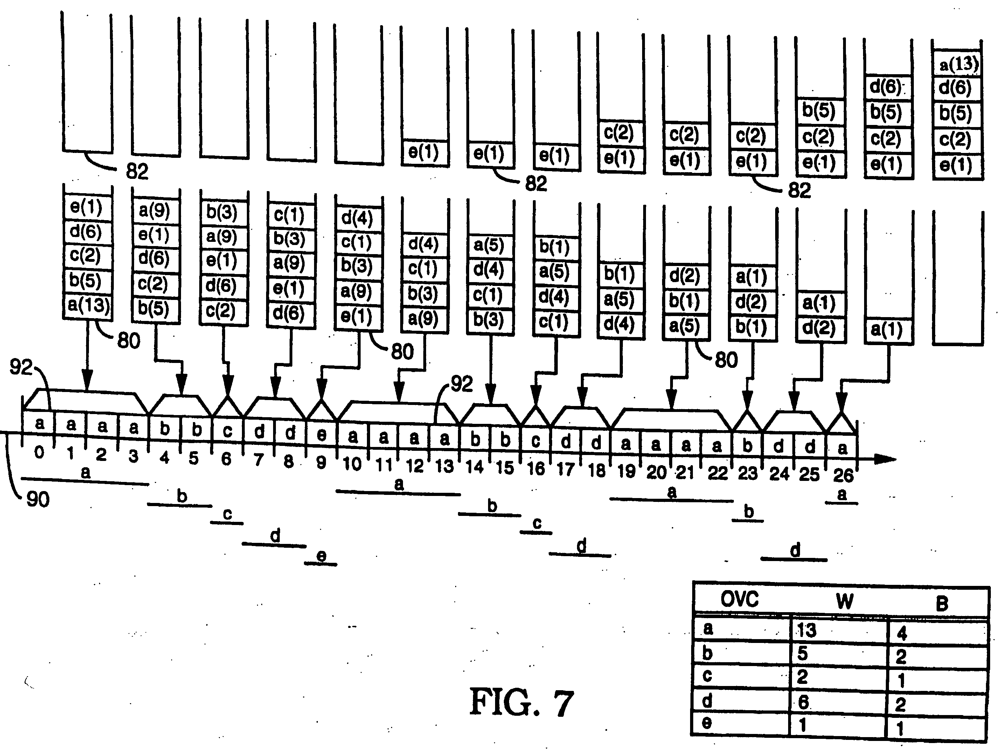

Fig. 7 illustrates a further example of the operation of the scheduler of the preferred embodiment. At time 0 on timeline 90, five VCs, a, b, c, d and e, are scheduled for servicing on active queue 80. Accordingly, a has a weight of 13 and a burst of 4 cells, b has a weight of 5 and a burst of 2 cells, c has a weight of 2 and a burst of 1 cell, d has a weight of 6 and a burst of 2 cells, and e has a weight of 1 and a burst of 1 cell. The value of the counter at each point on timeline 90 is shown in parenthesis next to each VC.

At times 0-3 4 a-cells are transmitted and the a-counter is decreased to 9. At times 4-5, 2 b-cells are transmitted and the b-counter is decreased to 3. At time 6, 1 c-cell is transmitted and the c-counter is decreased to 1. At times 7-8, 2 d-cells are transmitted and the d-counter is decreased to 4. At time 9, 1 e-cell is transmitted, the e-counter is decreased to 0, and e is moved to the wait queue 82. At times 10-13, 4 a-cells are again transmitted and the a-counter is decreased to 5. At times 14-15, 2 b-cells are transmitted and the b-counter is decreased to 1. At time 16, one c-cell is transmitted, the c-counter is decreased to 0 and c is moved to the wait queue 82. At times 17-18, 2 d-cells are transmitted and the d-counter is decreased to 2. At times 19-22, 4 a-cells are again transmitted and the a-counter is decreased to 1. At time 23, 1 b-cell is transmitted, the b-counter is decreased to 0, and b is moved to the wait queue 82. At times 24-25, 2 d-cells are transmitted, the d-counter is decreased to 0, and d is moved to the wait queue 82. Finally, at time 26, 1 a-cell is again transmitted, the a-counter is decreased to 0 and a is moved to the wait queue 82. As all VCs have been moved to the wait queue 82 (and the active queue 80 is empty), wait queue 82 becomes the active queue and active queue 80 becomes the wait queue and the scheduling operation is repeated.

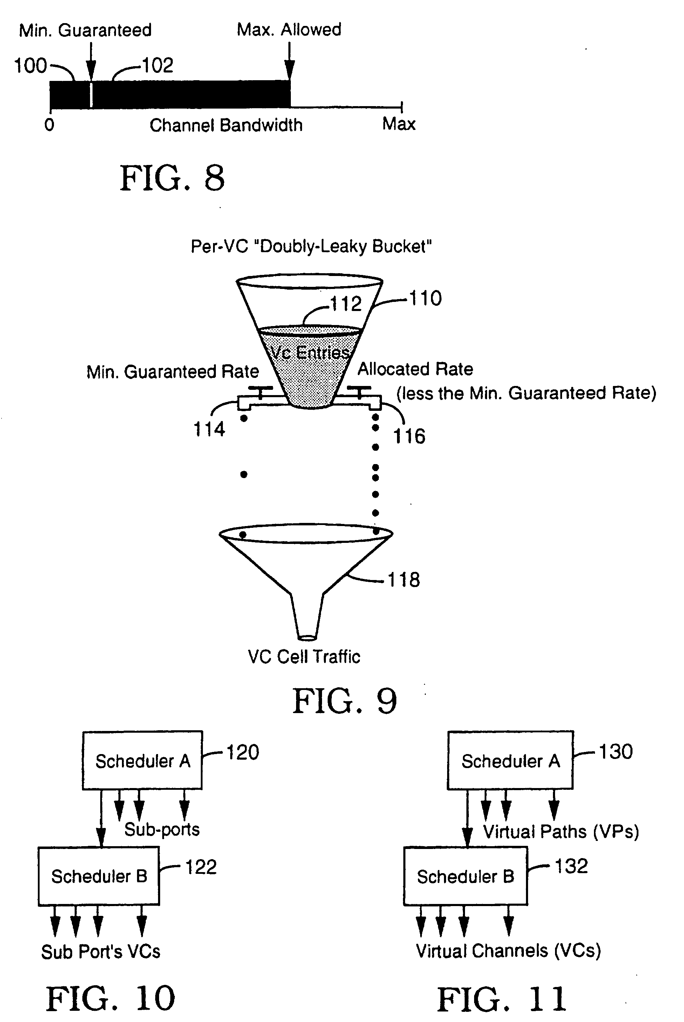

Furthermore, multiple schedulers may be used in parallel to implement particular arbitration/priority schemes. For example, one might want to assign to a virtual channel a minimum guaranteed bandwidth, but at the same time limit the maximum bandwidth that can be taken by each VC at any particular time. Fig. 8 illustrates the relationship between the minimum guaranteed bandwidth 100 and the maximum allowed bandwidth 102. This scheme is accomplished using two schedulers operating in parallel, with one scheduler having priority over the other scheduler.

This scheme can also be described by analogy to the "doubly leaky bucket" of Fig. 9. Bucket 110 is filled with liquid 112. Faucets 114 and 116 allow liquid 112 to drain into funnel 118 at different rates. If faucet 114 is set to a rate corresponding to the minimum guaranteed bandwidth 100 (shown in Fig. 8) and faucet 116 is set to a rate corresponding to the difference between the maximum allowed bandwidth 102 and the minimum guaranteed bandwidth 100 (shown in Fig. 8), liquid 112 will drain into funnel 118 in a fashion analogous to that illustrated in Fig. 8. Thus, on a conceptual level the scheduling method of the present invention operates similarly to the theoretical doubly leaky bucket of Fig. 8.

In addition, several lower bandwidth channels may be multiplexed onto a single, higher bandwidth channel by using multiple schedulers, as shown in Fig. 10. In Fig. 10, scheduler 120 is used to subdivide bandwidth among several low bandwidth channels and scheduler 122 is used to assign the appropriate bandwidth to each channel's VCs.

Furthermore, several VCs may be carried over a single virtual path (VP). In Fig. 11, scheduler 130 is used to provide the appropriate bandwidth to several VPs, while scheduler 132 is used to provide appropriate bandwidth to the VCs in one of the VPs.

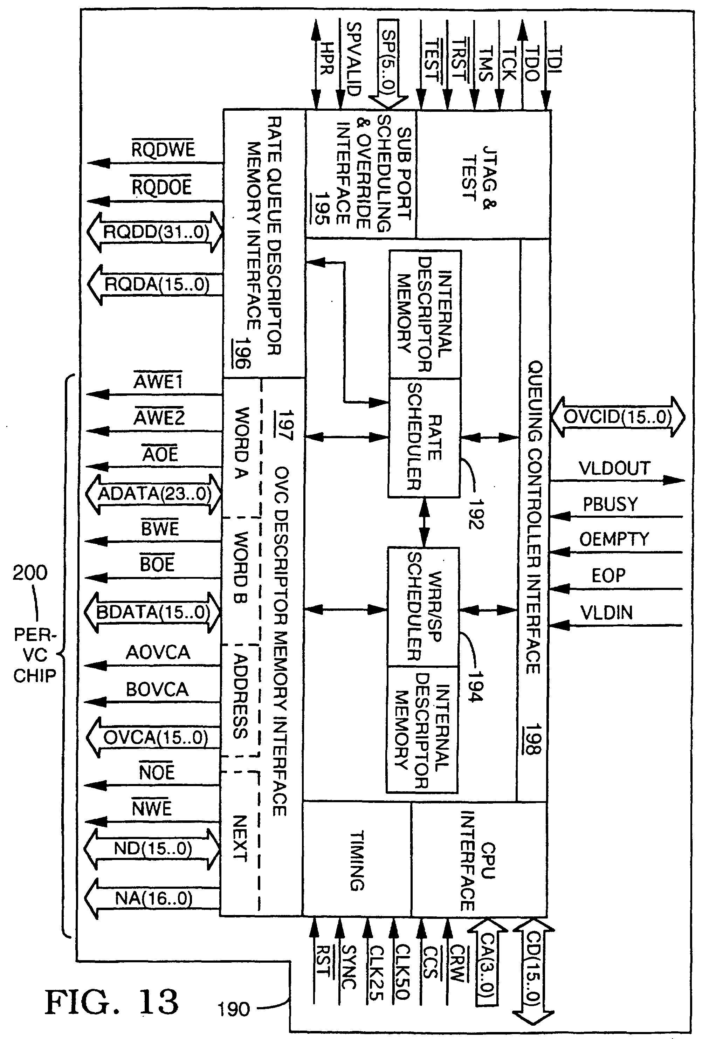

A block diagram of an integrated circuit for ATM cell scheduling according to one embodiment of the invention is shown in Fig. 13. ATM cell scheduler 190 comprises a time-wheel scheduler 192, as well as a weighted round robin/strict priority scheduler 194. Time-wheel schedulers are described in copending, U.S. Patent Application Serial No. 08/845,710 entitled "TIME-WHEEL ATM CELL SCHEDULING" by Alexander Joffe and Ari Birger and from which a corresponding European patent application claims priority and has been filed with the same filing date as the present application and which is incorporated herein by reference in its entirety.

ATM cell scheduler 190, further includes a subport scheduling interface module 195, a queue rate description memory interface module 196, an OVC descriptor memory interface 197 and a queuing controller interface 198. A listing of signals received and transmitted by ATM cell scheduler 190 and their corresponding pins is provided in Appendix A.

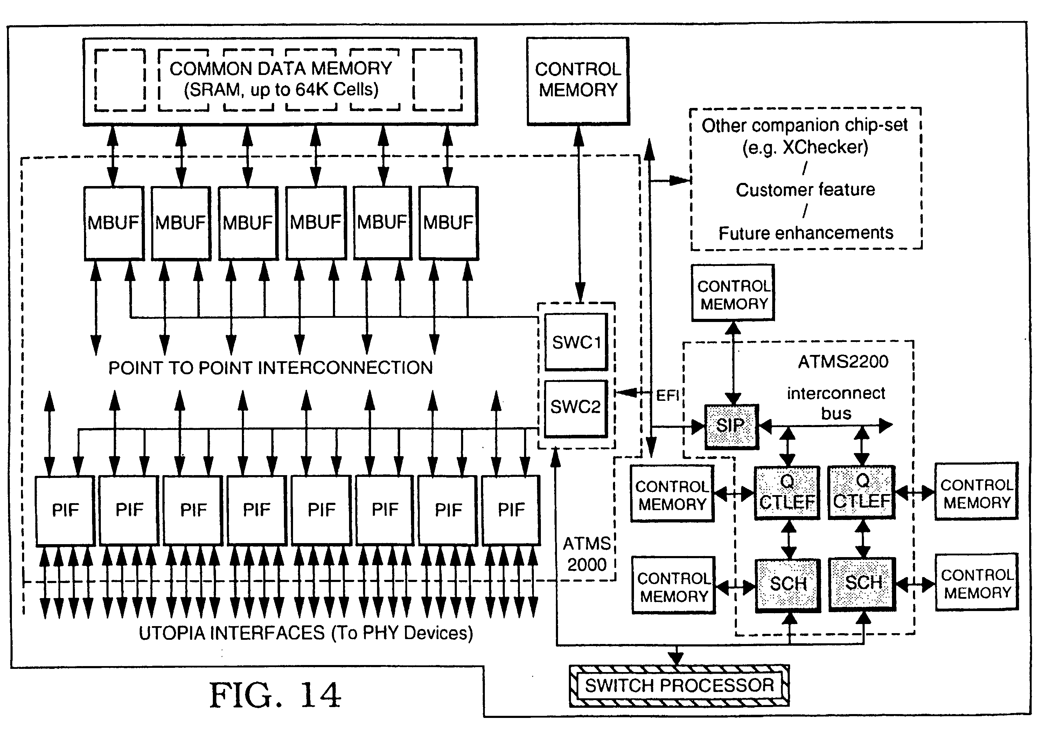

ATM cell scheduler 190 interfaces with Per-VC circuit 200 via OVC descriptor memory interface 197. Per-VC circuit 200 includes storage for data structures representing VC cells. By exchanging signals with Per-VC circuit 200 according to a predetermined protocol, ATM cell scheduler 190 controls the scheduling of ATM cells queued on the ATM switch of Fig. 14. Fig. 14 illustrates the structure of an ATM switch according to the present invention. Switch controllers 220 interface through switch interface 210 with per-VC circuits 200. Per-VC circuits 200 exchange signals with schedulers 190 to perform the scheduling of ATM cells for transmission. The ATM switch of Fig. 20 is described in International patent application published as WO98/09409 which is incorporated herein by reference in its entirety.

APPENDIX A

| Symbol | Timing | Width | I/O | Type | Function |
|--------|--------|-------|-----|------|----------|
| **Queuing Controller Interface** | | | | | |
| OVCID[15.0] | output. - S1 - S33, input. S36 - S0 | 16 | I/O | | Output Virtual Circuit Identifier<br>This interface is used to transfer OVCIDs to and from the XStream Queuing Controller at pipeline time t+2. |
| | | | | | Odd Ports 1+2 Cycle = S3, S5, S7, S9, S11, S13, S15, S17,.....,S33 |
| | | | | | Even Ports: t+2 Cycle = S2, S4, S6, S8, S10, S12, S14, S16,.....,S32 |
| | | | | | CPU Port: t+2 Cycle = S1<br>Note that the CPU port is always scheduled by the even scheduler. |
| VLDOUT | output, t+2 | 1 | O/T | | Valid OVCID out<br>This signal is used to Quality the OVCID during cycles when the Scheduler is expected to drive the OVCID interface. |
| PBUSY | output, t+4 | 1 | I | | Port Busy indication<br>This is a back pressure signal used to indicate when a port is full an ca not accept further cells |
| OEMPTY | output, t+4 | 1 | I | | OVC Empty<br>Indicates to the Scheduler that this cell is the last one waiting for transmission on this particular OVC. |
| EOP | output, t+4 | 1 | I | | End Of Packet<br>Indicates to the Scheduler that this cell is the last one in the current frame |
| VLDIN | S36 - S0 | 1 | I | | Valid OVC in<br>Indicates that a valid OVCID value is being driven by a Queuing Controller A maximum of 32 OVCIDs may be transferred in one switch cycle and the cycle timing of this information is not related to specific input ports. |
| **CPU Interface** | | | | | |
| CD[15..0] | | 16 | I/O | | CPU Data |

(continued)

| Symbol | Timing | Width | I/O | Type | Function |
|---|---|---|---|---|---|
| **CPU Interface** | | | | | |
| CA[3..0] | | 3 | I | | CPU Address<br>These signals determine the address of an internal register |
| $\overline{\text{CRW}}$ | | 1 | I | | CPU Read / Write<br>This signal determines the direction of the CPU access<br>'0' - Write Access<br>'1' - Read Access |
| $\overline{\text{CCS}}$ | | 1 | I | | CPU Chip Select - Active Low |
| **Timing** | | | | | |
| CLK50 | | 1 | I | | 50 MHz System Clock |
| CLK25 | | 1 | I | | 25 MHz System Clock<br>Locked in phase to CLK50 |
| SYNC | | 1 | I | | SYNC<br>This signal synchronizes the system to cycles of 68 25MHz clocks. The signal is asserted for one clock prior to the rising edge of the first clock of the Switch Cycle. |
| $\overline{\text{RST}}$ | | 1 | I | | Reset<br>Should be derived from the $\overline{\text{RSTO}}$ signal generated by the Switch Controller |
| **OVC Descriptor Memory Interface** | | | | | |
| NA[16..0] | | 17 | O | | Next Memory Address |
| ND[15..0] | | 16 | I/O | | Next Memory Data |
| $\overline{\text{NWE}}$ | | 1 | O | | Next Memory Write Enable - Active low |
| $\overline{\text{NOE}}$ | | 1 | O | | Next Memory Output Enable - Active low |
| OVCA[15.0] | | 16 | O | | OVC Descriptor Memory Address<br>This is the address used for accesses to OVC Descriptor Memory WORDA & WORDB |
| BOVCA | | 1 | O | | WORD B Memory Address<br>Address line connected only to OVC Descriptor Memory WORD B.<br>This address line is used to distinguish between Time Stamp and Weight fields in OVC descriptor memory. This address line may be connected to the least significant memory address line or the most significant memory address line.<br>OVCA[15..0] should be connected to either A[1..16] or A[0..15] of the memory depending on the connection of BOVCA. |

(continued)

| Symbol | Timing | Width | I/O | Type | Function |
|---|---|---|---|---|---|
| **OVC Descriptor Memory Interface** | | | | | |
| AOVCA | | 1 | O | | WORD A Memory Address<br>Address line connected only to OVC Descriptor Memory WORD A.<br>This address line is used to distinguish between Configuration and Mantissa/ Fraction fields in OVC descriptor memory. This address line may be connected to the least significant memory address line or the most significant memory address line. OVCA[15..0] should be connected to either A[1..16] or A[0..15] of the memory depending on the connection of AOVCA. |
| BDATA[15..0] | | 16 | I/O | | WORD B Memory Data<br>Data signals for WORDB |
| $\overline{BOE}$ | | 1 | O | | WORD B Memory Output Enable - Active low |
| $\overline{BWE}$ | | 1 | O | | WORD B Memory Write Enable - Active low |
| ADATA[23..0] | | 24 | I/O | | WORD A Memory Data |
| $\overline{AOE}$ | | 1 | O | | WORD A Memory Output Enable - Active low |
| $\overline{AWE1}$ | | 1 | O | | WORD A Memory Write Enable 1 - Active low<br>Used to write to ADATA[7..0] |
| $\overline{AWE2}$ | | 1 | O | | WORD A Memory Write Enable 2 - Active low<br>Used to write to ADATA[23..8] |
| **Rate Queue Descriptor Memory Interface** | | | | | |
| RQA[15..0] | | 16 | O | | Rate Queue Memory Address |
| RQD[31..0] | | 32 | I/O | | Rate Queue Memory Data |
| RQDOE | | 1 | O | | Rate Queue Memory Output Enable - Active low |
| $\overline{RQDRW}$ | | 1 | O | | Rate Queue Memory Write Enable - Active low |
| **Sub Port Scheduling and Override Interface** | | | | | |
| SP[5..0] | output t-3 | 6 | I | | Sub Port Identifier<br>This is an input from the Sub-Port Scheduler. Using this interface the Sub Port Scheduler indicates the relative Sub Port number which should be scheduled next for this port. This input is not required when Sub Ports are not being used. |
| SPVALID | output t-3 | 1 | I | | Sub Part ID Valid<br>The Sub Port Scheduler drives this signal high when a valid Sub Port ID is presented on SP[5..0] |
| HPR | output, t0 | 1 | I/O | | High Priority Override<br>This signal is driven by the high priority scheduler to indicate that it will drive the OVCID bus during the next clock cycle. The priority of the scheduler is programmed during system initialization. |
| **JTAG** | | | | | |
| TDI | | 1 | I | | JTAG Test Data In |
| TDO | | 1 | O | | JTAG Test Data Out |

(continued)

| Symbol | Timing | Width | I/O | Type | Function |
|---|---|---|---|---|---|
| **JTAG** | | | | | |
| TCK | | 1 | I | | JTAG Test Clock |
| TMS | | 1 | I | | JTAG Test Data In |
| $\overline{TRST}$ | | 1 | I | | JTAG Test Reset |
| $\overline{TEST}$ | | 1 | I | | When asserted all outputs are tri-stated |
| **Power Supply** | | | | | |
| VSS | | | | | Connection to ground. 'Core' indicates connection to core logic and 'I/O' indicates connection to the device I/O pads. |
| VDD | | | | | Connection to +3.3V supply. 'Core' indicates connection to core logic and 'I/O' indicates connection to the device I/O pads. |

**Claims**

1. A method of operating a cell scheduler for performing asynchronous transfer mode transmission of cells on virtual channels (24), wherein each virtual channel is assigned a weight, the method comprising queuing the virtual channels (24) in a first queue (20), and being **characterized by**:

   (a) selecting virtual channels (24) from the first queue (20), and performing the following operations for each selected virtual channel:

      (a1) transmitting a burst of one or more cells on the virtual channel (24); and
      (a2) moving the virtual channel to a second queue (22) if the total number of cells transmitted on the virtual channel (24) since the start of step (a) reaches a predetermined number of cells determined by the weight of the virtual channel (24); and

   (b) switching the first (20) and second (22) queues and repeating step (a).

2. A method as claimed in Claim 1, wherein step (b) is performed when the first queue (20) becomes empty.

3. A method as claimed in Claim 1, wherein step (b) is performed when the first queue (20) has no virtual channels (24) that can be selected for the sub-steps (a1) and (a2).

4. A method as claimed in any preceding claim, further comprising, in conjunction with each sub-step (a1):

   removing the selected virtual channel (24) from the first queue (20); and
   adding the virtual channel back to the first queue (20) if the total number of cells transmitted on the virtual channel since the start of step (a) has not reached the predetermined number of cells determined by the weight of the virtual channel.

5. A method as claimed in any preceding claim, wherein the number of cells in each burst is generated by dividing the weight assigned to the virtual channel (24) by a scaling coefficient and rounding the result to the next lowest integer.

6. A method as claimed in any one of Claims 1-4, wherein the number of cells in each burst is generated by dividing the weight assigned to the virtual channel (24) by a scaling coefficient and rounding the result to the next highest integer.

7. A method as claimed in any one of claims 1-4, wherein the number of cells in each burst is generated by dividing a highest weight of the virtual channels (24) by a predetermined maximum burst length.

8. The cell scheduler arranged for performing the method of any one or more of Claims 1 to 7.

9. A combination of a first cell scheduler and a second cell scheduler each of which is arranged to perform the method of any one or more of claims 1-7 on a plurality of virtual channels (24), wherein each virtual channel is assigned a weight in the first scheduler to correspond to a minimum guaranteed bandwidth allocated to the virtual channel.

**Patentansprüche**

1. Verfahren zum Betrieb eines Zellenabwicklers zur Durchführung einer Zellenübertragung im asynchronen Übertragungsmodus auf virtuellen Kanälen (24), wobei jedem virtuellen Kanal ein Gewicht zugeordnet wird, das Verfahren die Anordnung der virtuellen Kanäle (24) in einer ersten Warteschlange (20) umfasst und das Verfahren durch Folgendes **gekennzeichnet** ist:

   (a) Auswählen von virtuellen Kanälen (24) aus der ersten Warteschlange (20) und Durchfuhren folgender Operationen für jeden ausgewählten virtuellen Kanal:

   (a1) Übertragen eines Datenblocks aus einer oder mehreren Zellen auf dem virtuellen Kanal (24);

   (a2) Umlagern des virtuellen Kanals in eine zweite Warteschlange (22), wenn die Gesamtanzahl der Zellen, die seit dem Start in Schritt (a) auf dem virtuellen Kanal (24) übertragen wurden, eine vorherbestimmte Anzahl von Zellen erreicht, die durch das Gewicht des virtuellen Kanals (24) bestimmt wird; und

   (b) Umschalten der ersten (20) und der zweiten (22) Warteschlange und Wiederholen von Schritt (a).

2. Verfahren nach Anspruch 1, wobei Schritt (b) durchgeführt wird, wenn die erste Warteschlange (20) leer ist.

3. Verfahren nach Anspruch 1, wobei Schritt (b) durchgeführt wird, wenn die erste Warteschlange (20) keine virtuellen Kanäle (24) aufweist, die für die Unterschritte (a1) und (a2) ausgewählt werden konnen.

4. Verfahren nach einem der vorhergehenden Anspruche, das des Weiteren zusammen mit jedem Unterschritt (a1) Folgendes umfasst:

   Entfernen des ausgewählten virtuellen Kanals (24) aus der ersten Warteschlange (20); und
   Hinzufügen des virtuellen Kanals zurück zur ersten Warteschlange (20), wenn die Gesamtanzahl der Zellen, die seit dem Start in Schritt (a) auf dem virtuellen Kanal übertragen wurden, nicht die vorherbestimmte Anzahl von Zellen erreicht, die durch das Gewicht des virtuellen Kanals bestimmt wird.

5. Verfahren nach einem der vorhergehenden Ansprüche, wobei die Anzahl der Zellen in jedem Datenblock durch Teilung des Gewichts, das dem virtuellen Kanal (24) zugeordnet wird, durch einen Skalierungskoeffizienten und durch Runden des Ergebnisses auf die nächstgelegene niedrigere Ganzzahl erzeugt wird.

6. Verfahren nach einem der Ansprüche 1 bis 4, wobei die Anzahl der Zellen in jedem Datenblock durch Teilung des Gewichts, das dem virtuellen Kanal (24) zugeordnet wird, durch einen Skalierungskoeffizienten und durch Runden des Ergebnisses auf die nächstgelegene höhere Ganzzahl erzeugt wird.

7. Verfahren nach einem der Ansprüche 1 bis 4, wobei die Anzahl der Zellen in jedem Datenblock durch Teilung eines höchsten Gewichts der virtuellen Kanäle (24) durch eine vorherbestimmte Höchstdatenblocklänge erzeugt wird.

8. Zellenabwickler, der zur Durchführung des Verfahrens nach einem oder mehreren der Ansprüche 1 bis 7 angeordnet ist.

9. Kombination aus einem ersten Zellenabwickler und einem zweiten Zellenabwickler, wobei jeder Zellenabwickler zur Durchführung des Verfahrens nach einem oder mehreren der Ansprüche 1 bis 7 auf einer Vielzahl von virtuellen Kanälen (24) angeordnet ist und jedem virtuellen Kanal ein Gewicht im ersten Abwickler zugeordnet wird, um einer garantierten Mindestbandbreite zu entsprechen, die dem virtuellen Kanal zugeordnet ist.

**Revendications**

1. Procédé d'exploitation d'un ordonnanceur de cellules pour effectuer une transmission à mode de transfert asynchrone de cellules sur des canaux virtuels (24), dans lequel un poids est attribué à chaque canal virtuel, le procédé comprenant la mise en file d'attente des canaux virtuels (24) dans une première file d'attente (20), et étant **caractérisé par** :

   (a) la sélection de canaux virtuels (24) de la première file d'attente (20), et l'exécution des opérations suivantes pour chaque canal virtuel sélectionné :

      (a1) la transmission d'une salve d'une ou de plusieurs cellules sur le canal virtuel (24) ; et
      (a2) le déplacement du canal virtuel dans une deuxième file d'attente (22) si le nombre total de cellules transmises sur le canal virtuel (24) depuis le début de l'étape (a) atteint un nombre prédéterminé de cellules déterminé par le poids du canal virtuel (24) ; et

   (b) la commutation des première (20) et deuxième (22) files d'attente et la répétition de l'étape (a).

2. Procédé selon la revendication 1, dans lequel l'étape (b) est exécutée quand la première file d'attente (20) devient vide.

3. Procédé selon la revendication 1, dans lequel l'étape (b) est exécutée quand la première file d'attente (20) n'a aucun canal virtuel (24) pouvant être sélectionné pour les sous-étapes (a1) et (a2).

4. Procédé selon l'une quelconque des revendications précédentes, comprenant en outre en conjonction avec chaque sous-étape (a1) :

   le retrait du canal virtuel sélectionné (24) de la première file d'attente (20) ; et
   la réintégration du canal virtuel dans la première file d'attente (20), si le nombre total de cellules transmises sur le canal virtuel depuis le début de l'étape (a) n'a pas atteint le nombre prédéterminé de cellules déterminé par le poids du canal virtuel.

5. Procédé selon l'une quelconque des revendications précédentes, dans lequel le nombre de cellules dans chaque salve est généré en divisant le poids attribué au canal virtuel (24) par un coefficient de redimensionnement et en arrondissant le résultat au nombre entier inférieur suivant.

6. Procédé selon l'une quelconque des revendications 1 à 4, dans lequel le nombre de cellules dans chaque salve est généré en divisant le poids attribué au canal virtuel (24) par un coefficient de redimensionnement et en arrondissant le résultat au nombre entier supérieur suivant.

7. Procédé selon l'une quelconque des revendications 1 à 4, dans lequel le nombre de cellules dans chaque salve est généré en divisant le poids le plus élevé des canaux virtuels (24) par une longueur de salve maximum prédéterminée.

8. Ordonnanceur de cellules agencé pour exécuter le procédé selon l'une quelconque ou plusieurs des revendications 1 à 7.

9. Combinaison d'un premier ordonnanceur de cellules et d'un deuxième ordonnanceur de cellules qui sont chacun agencés pour exécuter le procédé selon l'une quelconque ou plusieurs des revendications 1 à 7 sur une pluralité de canaux virtuels (24), dans lequel un poids est attribué à chaque canal virtuel dans le premier ordonnanceur afin de correspondre à une largeur de bande minimum garantie attribuée au canal virtuel.

FIG. 1 (PRIOR ART)

FIG. 2

FIG. 3A

FIG. 3B

FIG. 3C

FIG. 3D

ACTIVE

WAIT

ACTIVE

WAIT

ACTIVE

WAIT

ACTIVE → WAIT

WAIT → ACTIVE

$VC_1$ $VC_1$ $VC_1$ $VC_2$ $VC_2$ $VC_2$ $VC_2$ $VC_2$ $VC_3$ $VC_4$ $VC_4$ $VC_1$ $VC_1$ $VC_1$ $VC_2$ $VC_2$ $VC_2$ $VC_2$ $VC_2$

$VC_k$ $VC_j$ $VC_i$ $VC_n$ $VC_m$ $VC_l$

$VC_4$ $VC_3$ $VC_2$ $VC_1$

FIG. 4A

FIG. 4B

FIG. 4C

FIG. 5

FIG. 6

W - WEIGHT
C - CURRENT CELL COUNTER (INITIAL = W)
B - BURST <=ROUND-UP (W/SCALE)

E - EMPTY FLAG
RP - ACTIVE QUEUE READ POINTER
WP - ACTIVE QUEUE WRITE POINTER

EP 0 874 532 B1

FIG. 7

| OVC | W | B |
|---|---|---|
| a | 13 | 4 |
| b | 5 | 2 |
| c | 2 | 1 |
| d | 6 | 2 |
| e | 1 | 1 |

Min. Guaranteed    Max. Allowed

100 ─────102

0      Channel Bandwidth      Max

## FIG. 8

Per-VC "Doubly-Leaky Bucket"

112  ─110

Vc Entries

Min. Guaranteed Rate      Allocated Rate

(less the Min. Guaranteed Rate)

114      116

─118

VC Cell Traffic

## FIG. 9

Scheduler A ─120

Sub-ports

Scheduler B ─122

Sub Port's VCs

## FIG. 10

Scheduler A ─130

Virtual Paths (VPs)

Scheduler B ─132

Virtual Channels (VCs)

## FIG. 11

15

FIG. 12

**FIG. 13**

190

FIG. 14

EP 0 874 532 B1